(19) Europäisches Patentamt
European Patent Office
Office européen des brevets

(11) **EP 1 490 707 B1**

(12) **EUROPÄISCHE PATENTSCHRIFT**

(45) Veröffentlichungstag und Bekanntmachung des Hinweises auf die Patenterteilung:
**21.03.2007 Patentblatt 2007/12**

(21) Anmeldenummer: **03744757.0**

(22) Anmeldetag: **10.01.2003**

(51) Int Cl.:
**G01S 13/00** (2006.01)

(86) Internationale Anmeldenummer:
**PCT/DE2003/000051**

(87) Internationale Veröffentlichungsnummer:
**WO 2003/081278 (02.10.2003 Gazette 2003/40)**

(54) **RADAR-EINRICHTUNG FUER SOWOHL BISTATISCHEN ALS AUCH MONOSTATISCHEN BETRIEB**

RADAR DEVICE FOR BISTATIC AND MONOSTATIC MODES OF OPERATION

RADAR A MODES D' OPERATION BISTATIQUES ET MONOSTATIQUES

(84) Benannte Vertragsstaaten:
**DE ES FR GB IT SE**

(30) Priorität: **27.03.2002 DE 10213987**

(43) Veröffentlichungstag der Anmeldung:
**29.12.2004 Patentblatt 2004/53**

(73) Patentinhaber: **ROBERT BOSCH GMBH**
**70442 Stuttgart (DE)**

(72) Erfinder:
• **KLINNERT, Roland**
**70825 Korntal-Muenchingen (DE)**
• **ZOTT, Christian**
**74321 Bietigheim-Bissingen (DE)**

(56) Entgegenhaltungen:
**EP-A- 0 446 678          US-A- 5 604 503**

• **DOREY J ET AL: "RIAS, RADAR A IMPULSION ET ANTENNE SYNTHETIQUE" ONDE ELECTRIQUE, EDITIONS CHIRON S.A. PARIS, FR, Bd. 69, Nr. 6, 1. November 1989 (1989-11-01), Seiten 36-44, XP000073623 ISSN: 0030-2430**

**Beschreibung**

Stand der Technik

Die Erfindung betrifft eine Radar-Einrichtung für sowohl bistatischen als auch monostatischen Betrieb.

Aus der EP-A-0 446 678 ist eine Einrichtung für insbesondere polystatische Radaranwendungen bekannt mit räumlich beabstandeten Radarmodulen für Sende- und Empfangsbetrieb und einer Zeitsynchronsteuerung der Pulse für mindestens zwei einander zugeordnete Sende- und Empfangsmodulen.

Die bis heute geltende prinzipielle Funktionsweise von Pulsradaren zur Abstands- und Geschwindigkeitsmessung von Objekten wurde bereits 1938 von Col. Wiliam Blair vom US Signal Corps beschrieben. Durch Pulsmodulation eines Mikrowellenträgers wird periodisch mit der Pulswiederholrate (Pulse Repetition Frequency PRF) ein Signal einer definierten Pulsdauer $T_p$ gesendet. Das von einem Objekt reflektierte Signal wird im Empfänger ins Basisband herabgesetzt. Durch Auswertung des Basisband-Signals wird die Signal-Laufzeit T und eventuell die Signal-Dopplerverschiebung $f_D$ ermittelt. Aus der Laufzeit T folgt die Objekt-Sensor-Schräg-Entfernung R schließlich mit der Lichtgeschwindigkeit c aus R=c·T/2, und die Objekt-Relativ-Geschwindigkeit v mit der Trägerfrequenz $f_C$ aus v=c/2·$f_D$/$f_C$.

Übliche Pulsradar-Systeme verwenden folgende Betriebsarten:

LPRF (Low PRF):

Pulsradare mit derart niedriger Pulswiederholfrequenz PRF, dass stets eine eindeutige Messung bis zum größten gewünschten Objekt-Abstand möglich ist. Treten Geschwindigkeiten auf, die zu $f_D$ größer PRF/2 führen können, ist die Geschwindigkeitsbestimmung aber nicht mehr eindeutig.

HPRF (High PRF):

Betrieb mit einer so hohen Pulswiederholfrequenz, dass stets die Geschwindigkeitsbestimmung im gesamten relativen Geschwindigkeitsbereich eindeutig ist. Die Entfernungsmessung ist nur dann eindeutig, falls alle Objekte im Erfassungsbereich ausschließlich kleinere Abstände als c/(2 PRF) zu den Sensoren haben.

PRF Staffelung (staggered PRF):

Zur Vermeidung von sogenannten Blindgeschwindigkeiten, die bei konstanter PRF existieren, oder zur Einebnung des bei konstanter PRF gegebenen Linienspektrums des Sendesignals, z.B. zur verbesserten Störunterdrückung, wird auch mit Pulspause-Intervallen variabler Länge gearbeitet (Variable Interpulse Period VIP).

Kohärente Abmischung:

Zur Herabsetzung des Empfangssignals ins Basisband mischt der Empfänger üblicherweise das Empfangssignal mit einer Kopie des Sendesignals. Die Kopie kann, bei räumlicher Nähe von Sender und Empfänger, eventuell vom gleichen Oszillator wie das Sendesignal oder von einem zweiten empfängereigenen Oszillator abgeleitet werden. Je nachdem, ob zwischen den Phasen des Empfangssignals und dessen Kopie von Puls zu Puls eine regellose Beziehung existiert oder nicht spricht man von nicht-kohärenter oder kohärenter Abmischung. Die kohärente Abmischung gestattet eine genaue Doppler-, bzw. Geschwindigkeitsbestimmung. Um die gewünschte Kohärenz zu erreichen, muß meist aber ein hoher Aufwand zur Synchronisation der Phasen getrieben werden (Einsatz von z.B. Lockpuls-Verfahren oder digitalen Detektoren der Sendephase). Nicht kohärente Verfahren werden meist dann herangezogen, wenn keine oder nur eine ungenaue Geschwindigkeitsmessung gefordert wird.

Monostatisch, Bistatisch:

Sind Sende- und Empfangsantenne "deutlich" voneinander räumlich entfernt und werden das Sendesignal und dessen Kopie zur Abmischung von verschiedenen Oszillatoren abgeleitet, spricht man üblicherweise von bistatischen Radarsystemen, im Gegensatz zu monostatischen.

Pulskompressionen:

Die Erzielung einer minimalen Reichweite eines Pulsradars erfordert eine minimale Gesamtenergie, die von einem Objekt reflektiert und von Empfänger aufintegriert werden muß. Bei vorgegebener Pulswiederholrate, begrenzter Spitzenleistung des Senders und begrenzter zulässiger Integrationszeit kann die Energie nur noch durch Verlängerung der Pulsdauer vergrößert werden. Andererseits bestimmt die Korrelationsdauer (Breite der Autokorrelationsfuktion) eines Pulses die erreichbare Auflösung eines Pulsradars. Durch pulsinterne Modulation/Codierung, auch Pulskompressionsverfahren genannt, können theoretisch die Korrelationsdauer (die Auflösung) und Pulsdauer (Energie und mittlere Leistung und damit instrumentierte Reichweite) unabhängig voneinander festgelegt werden. Übliche Kompressionsverfahren sind lineare oder nichtlineare Frequenzmodulation, sowie Biphasen- oder Mehrphasenmodulation.

Aus der Literatur ist bekannt, dass die unterschiedlichsten Kombinationen und Mischformen der oben genannten Verfahren zur Anwendung kommen.

Anwendungsgebiete von Pulsradaren:

Monostatische Pulsradare:

Insbesondere im Militärbereich und bei der zivilen Luftraum-Überwachung kommen zur Messung großer Abstände und zum Teil hoher Geschwindigkeiten häufig monostatische Pulsradare mit großer Sendeleistung und Antennenrichtwirkung (Strahlbündelung) zum Einsatz. Häufig wird ein Range- und Azimuth-Scan durchgeführt, sowie eine relativ aufwendige Dopplerverarbeitung (MTI, MTD Verfahren), sowie in der Regel Pulscodierung/-Kompression, z.B. Chirp und Modulation der PRF (VIP, staggered PRF) angewendet.

Bistatische Pulsradare:

Bistatische Pulsradare sind fast ausnahmslos im Militärbereich, in der Astronomie und in der Meteorologie zu finden, bei denen große Objekt-Entfernungen bei großen Sender- und Empfänger-Distanzen (Baselines z.B. im Bereich hunderter von Kilometern) vorliegen. An die Komponenten solcher bistatischen Radare werden meist hohe Anforderungen gestellt, insbesondere wegen der notwendigen zeitlichen Synchronisation der Sensoren (Pulssynchronisation für Entfernungsmessung, Phasensynchronisation für Geschwindigkeitsmessung (Doppler)) über große räumliche Distanzen. Zudem gilt die erforderliche synchronisierte Ausrichtung der Blickrichtungen und gegebenenfalls Berücksichtigung von Plattform-Bewegungen als schwierig.

Low-Cost Pulsradare:

Mikrowellen-Pulsradare werden zunehmend bei Anwendungen eingesetzt, bei denen Objekte in kleinen Distanzen mit niedriger Sendeleistung und breitem Sichtbereich erfaßt werden sollen und zudem niedrige Kosten gefordert werden, z.B. Türöffner, Raumüberwachung, Kfz-Umfelderfassung. Hierbei werden häufig monostatische LPRF Verfahren, nicht-kohärente Abmischung, keine Pulskompression oder eventuell Pulskompression mit Biphasenmodulation eingesetzt. Im Gegensatz zu militärischen Radaranlagen oder Luftraum-Überwachungsradaren werden bei den Low-Cost-Pulsradaren selten hochwertige Komponenten, sondern eher z.B. Oszillatoren mit geringer Frequenz-Stabilität, Mixer und LNAs mit geringer Bandbreite und hoher Rauschzahl eingesetzt.

Vorteile der Erfindung

Mit den Maßnahmen der Erfindung ist eine Kreuzecho-Detektion und -Abstandsmessung bei bistatischen Pulsradaren, also räumlich getrennten Sende- und Empfangsantennen und Trägerfrequenz-Oszillatoren möglich, wobei die beiden Trägerfrequenz-Oszillatoren eines jeden Senders/Empfänger-Paares, im Gegensatz zu üblichen bistatischen Systemen, freilaufend betrieben werden können, das heißt nicht notwendigerweise durch aufwendige Maßnahmen frequenz- oder phasensynchronisiert werden müssen.

Die erfindungsgemäße Einrichtung unterscheidet sich von üblichen bistatischen Radaranwendungen durch eine zeitsynchrone Pulsmodulation bei Sende- und Empfangsmodulen.

Die Erfindung ist vorteilhaft im Zusammenhang mit einer Pulswiederholrate verwendbar, die gemäß dem LPRF Verfahren gewählt wird, insbesondere eine Pulswiederholrate, die nur langsam zeitlich veränderlich oder stückweise zeitlich konstant gewählt wird.

Damit ist ein bistatisches Pulsradar auch im Low-Cost Bereich bei kleinen Sendeleistungen zur Messung kleiner Kreuzecho-Abstände (bei kleinen Baselines) bei nicht hochwertigen Komponenten realisierbar. In Pulsradar-Arrays können damit Direkt- und Kreuzecho-Abstände gleichzeitig gemessen werden. Die zusätzlichen Kreuzecho-Abstände erhöhen die räumliche Abtastung des Sensorumfeldes, können zur Klassifikation von Objektkonturen herangezogen werden und erhöhen die Redundanz der Sensorinformationen.

Die zeitsynchrone Pulsmodulation der Träger von Nachbarsensoren und Mischung von Sende- und Empfangssignalen resultiert in "Spiegel-Signalen" mit Frequenzanteilen unterhalb der halben Pulswiederholrate PRF, im Folgenden "Kreuzecho-Signal" genannt. Die Mittenfrequenz dieses Kreuzecho-Signals kann mit der Pulswiederholrate PRF eingestellt werden. Die Leistung des Kreuzecho-Signals liefert ein kontinuierliches NF-Signal womit eine Kreuzecho-Detektion und -Abstandsmessung möglich ist.

Zusätzlich zur beschriebenen Durchführung kann eine Pulskompression durchgeführt werden. Ebenso ist ein Puls-Jitter möglich, sofern dieser derart erzeugt wird, dass er für beiden Sensoren synchron ist und das Kreuzecho-Signal, in Bezug auf die anschließende Auswerteeinheit noch genügend bandbegrenzt ist.

Zeichnungen

Anhand der Zeichnungen werden Ausführungsbeispiele der Erfindung erläutert. Es zeigen

Figur 1 ein zeitsynchron gesteuertes Pulsradar Sender- Empfänger-Paar,
Figur 2 ein Leistungsdichte-Spektrum der gemischten, ungepulsten Träger von Nachbarsensoren,
Figur 3 ein Leistungsdichte-Spektrum der gemischten, gepulsten Träger von Nachbarsensoren bei vernachlässigbarer Pulsdauer,
Figur 4 das Leistungsdichte-Spektrum der gemischten, gepulsten Träger von Nachbarsensoren bei nicht vernachlässigbarer Pulsdauer,
Figur 5 das Leistungsdichte-Spektrum eines realen I(Q)-Signals bei Kreuzecho-Empfang,
Figur 6 eine Kreuzecho-Signalregelung und -Auswertung bezüglich einer Ausführungsvariante mit niedrigem Aufwand,
Figur 7 eine Kreuzecho-Signalregelung und -Auswertung bezüglich einer Ausführungsvariante mit mittlerem Aufwand (Spectrum-Analyzer-Prinzip)
Figur 8 eine Kreuzecho-Signalregelung und -Auswertung bezüglich einer Ausführungsvariante mit höherem Aufwand (MTD-Prinzip),
Figur 9 zwei Sende- und Empfangssensoren mit Darstellung der Direktechos und Kreuz-Signalechos sowie des Kreuzecho-Rangescans.

Beschreibung von Ausführungsbeispielen

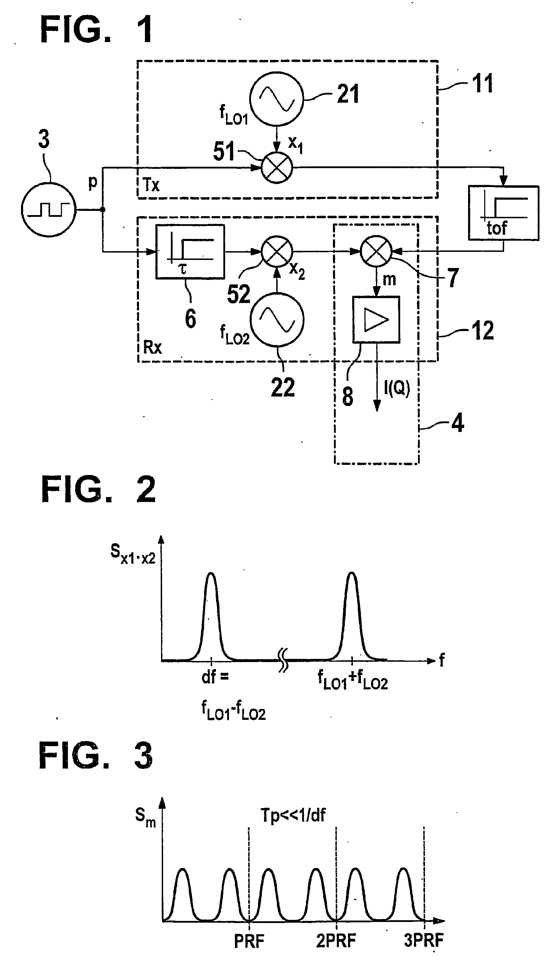

Figur 1 zeigt Ausschnitte eines gewöhnlichen Pulsradar-Sender-Empfängerpaares 11, 12, von denen das obere Modul 11 als Sendermodul (Tx), das untere Modul 12 als Empfangsmodul (Rx) arbeitet. Die Module erzeugen mit ihren jeweiligen Trägerfrequenz-Oszillatoren 21, 22 Trägersignale $x_1$ und $x_2$ mit individuellen Trägerfrequenzen $f_{LO1}$ und $f_{LO2}$. Diese Trägersignale werden vorzugsweise von derselben Pulsquelle 3 mit der 0-1 Pulsfolge p moduliert, das heißt mittels der Modulatoren 51, 52 werden den Ausgangssignalen der Trägerfrequenz-Oszillatoren Pulse aufgeprägt. Es kann natürlich jedem der Module 11, 12 auch eine separate Pulssignatquelle 3 zugeordnet sein. Dann ist jedoch eine Synchronisation dieser Pulssignalquellen untereinander erforderlich. Dies kann entweder durch eine Verbindungsleitung oder andernfalls durch Rückgewinnung der Sende-PRF aus dem Empfangssignal und Kompensation des Phasenversatzes geschehen. Die Ermittlung des Phasenversatzes ist durch Ausnutzung von Redundanz möglich, da aufgrund der Umkehrbarkeit der Signallaufwege (S. 11 bis 12) normalerweise immer zwei Kreuzecho- und eventuell noch zusätzlich vorhandene Direktechomessungen eines Objektes zur Verfügung stehen (z.B. sei: Δ=Phasenvorlauf von Pulssignalquelle 1 zu Pulssignalquelle 2; tofK: Kreuzecholaufzeit von S11 zu Objekt K nach S12 bzw. Rückrichtung; tofK12: Kreuzechomessung von S11 nach S12 relativ zu Pulssignalquelle 2; tofK21: Kreuzechomessung von S12 nach S11 relativ zu Pulssignalquelle 1; dann gilt:

$$\text{tofK} = \text{tofK12} - \Delta \text{ und tofK} = \text{tofK21} + \Delta \rightarrow \Delta = (\text{tofK12} - \text{tofK21})/2 \rightarrow \text{tofK} = (\text{tofK12} + \text{tofK21})/2).$$

Das abgestrahlte Signal des Senders wird nach Reflexion an einem Objekt nach der Laufzeit (Time-of-Flight tof) vom Empfänger aufgenommen. Der Empfänger verzögert mit einer Verzögerungsschaltung/Verzögerungsleitung 6 die Pulsfolge p um die Verzögerungszeit τ. Entspricht die eingestellte Verzögerung τ der Laufzeit tof, ergibt sich am Ausgang des Mischers 7, dem, einerseits einen im Empfangsmodul aufbereiteten gepulsten Träger und andererseits ein Empfangssignal zuführbar ist, bedingt durch die zeitsynchrone Pulsmodulation, das Signal $m = p \cdot x_1 \cdot x_2$ falls τ=tof.

Dieses (ideale) Mischsignal wird beispielsweise in einer Auswerteeinrichtung 4 vom nachfolgenden reellen Verstärker 8 und vom realen Mischer 7 selbst tiefpassgefiltert. Am Ausgang des Verstärkers bzw. Impedanzwandlers steht dann das I-Signal und im Falle eines zweiten Mischers, der mit dem 90° phasenversetzten Träger arbeitet, auch ein Q-Signal zur weiteren NF-Signalverarbeitung zur Verfügung. Im Folgenden wird beschrieben, welches Spektrum sich für das I(Q)-Signal ergibt.

1. Die Mischung (Multiplikation) der ungepulsten Träger, siehe $x_1$ und $x_2$ in Figur 1, zweier Nachbarsensoren mit der mittleren Differenzfrequenz $df=f_{LO1}-f_{LO2}$ würde zu einem Spektrum mit bandbegrenzten Anteilen um $df=f_{LO1}-f_{LO2}$ und $f_{LO1}+f_{LO2}$ führen (Figur 2). Der Summenanteil kann wegen des Tiefpassverhaltens von Mischer 7 und Verstärker 8 im Folgenden vernachlässigt werden. Die Breite des verbleibenden Spektralanteils um df ist durch die Kurzzeit-Frequenzstabilität der Trägerfrequenz-Oszillatoren während der Pulsintegrationszeit bestimmt. Wesentlich ist, dass ein solches bandbegrenztes Spektrum auch bei nicht frequenz- oder phasensynchronisierten Oszillatoren entsteht.

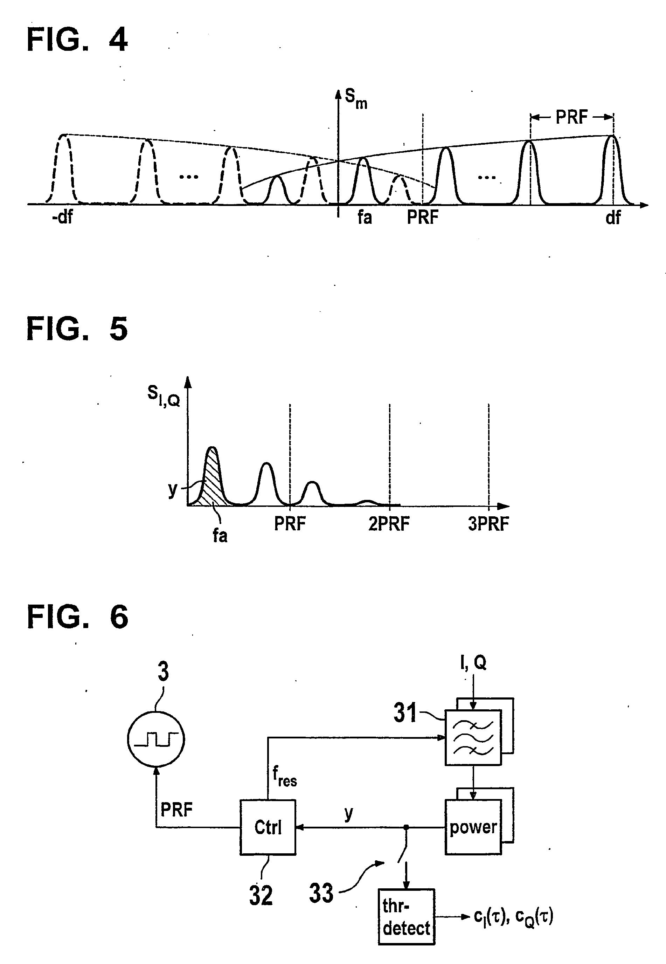

2. Die Pulsmodulation des Produktes $x_1 \cdot x_2$, die schließlich zum idealen Mischsignal m führt, entspricht einer Abtastung, wobei die Abtastfrequenz durch die eingestellte Pulswiederholrate PRF des Pulsgenerators gegeben ist. Im Spektrum führt eine Idealabtastung (8-Abtastung) aber zur periodischen Fortsetzung des Spektrums des abgetasteten Signals. Es würde also das um df verteilte Spektrum je zwei mal in die Frequenzintervalle [z.PRF, (z+1)-PRF], wobei z eine ganze Zahl ist, gespiegelt (Figur 3). Man beachte, dass immer, also auch bei der Differenzfrequenz df, die wesentlich größer als die Pulswiederholrate PRF ist (also bei Unterabtastung), ein bandbegrenztes Signal im Frequenzbereich [0,PFR/2] entsteht. Die Mittenfrequenz fa des "Spiegel-Signals" in [0,PFR/2] und die Differenzfrequenz df hängen dabei gemäß

$$df=n\cdot PRF+-fa$$

zusammen, wobei $n \in N_0$ (ganzzahliger Teiler zwischen df und PRF). Eine ideale Abtastung liegt näherungsweise vor, wenn die Pulsdauer sehr klein gegenüber der kleinsten Periodendauer des abgetasteten Signals ist, das heißt $T_p \ll 1/df$, ist. Ist dies nicht der Fall, fallen die Amplituden der wiederholten Spektralanteile mit einer Einhüllenden ab, die durch die Pulsform und die nicht vernachlässigbare Pulsdauer definiert ist (Figur 4). Bei einem Rechteckimpuls der Länge Tp ist die Einhüllende beispielsweise ein sinx/x Verlauf mit der ersten Nullstelle bei 1/Tp.

3. Das Spektrum des realen IQ-Signals, fällt oberhalb der Grenzfrequenz von Mischer und Verstärker/Impedanzwandler, die in aller Regel wesentlich kleiner als die Differenzfrequenz df sind, deutlich ab und ähnelt im allgemeinen einem in Figur 5 gezeigten Verlauf. Dieser, durch ein Kreuzecho im I(Q)-Signal entstehende begrenzte Signalanteil mit seinen wesentlichen Frequenzanteilen unterhalb PRF/2 wird im Folgenden Kreuzecho-Signale genannt. Ein Direktecho eines sich extrem schnell bewegenden Objektes mit zugehörigen Dopplerfrequenzen um $f_D=df$ würde zu einem ähnlichen Signal führen.

4. Man beachte, dass die Spiegelfrequenz fa des Kreuzecho-Signals mit der vorgebbaren Pulswiederholfrequenz PRF (bei langsam veränderlicher Zeitfrequenz df) gemäß (1) stets auf einen gewünschten Wert eingestellt werden kann. Insbesondere ist es möglich, durch gezielte Einstellung der PRF einerseits sicher zu stellen, dass die Spiegelfrequenz fa stets unterhalb der Grenzfrequenz von Mischer und Verstärker liegt. Andererseits kann bei parallelem Empfang von Direktechos des Sensors dafür gesorgt werden, dass die Spiegelfrequenz fa stets oberhalb der maximalen Dopplerfrequenz $f_{Dmax}$ liegt. Dies kann als "Frequenz-Multiplex"-Nutzung des I(Q)-Signals aufgefasst werden, bei dem Direktechos und Kreuzechos in voneinander getrennten Frequenzbereichen liegen.
Wesentliche Voraussetzung für eine eindeutige Trennung ist natürlich, dass die Lokaloszillatoren so kurzzeit-frequenzstabil sind, dass die Bandbreite von $x_1 \cdot x_2$ stets kleiner als PRF/2-$f_{Dmax}$ ist.

5. Der Teiler n und die Spiegelfrequenz fa charakterisieren die momentane Differenzfrequenz eines Sensorpaares bei dem Kreuzecho-Empfang besteht. Damit ist bei Sensorarrays mit mehr als 2 Sensoren, bei denen die Differenzfrequenzen aller relevanten Sensorpaare signifikant voneinander abweichen, eine Senderidentifikation auch bei parallelem Empfang mehrerer Kreuzechos möglich.

Die erfindungsgemäße Einrichtung ist insbesondere durch folgende Merkmale charakterisiert: .

- Synchrone Pulsansteuerung (Verbindungsleitung oder durch Rückgewinnung der Sender-PRF aus dem Empfangssignal und Kompensation des Phasenversatzes)
- Nutzung des Kreuzecho-Signals in I, Q- oder davon abgeleiteten Signalen unterhalb von PRF/2
- Steuerung/Regelung der Mittenfrequenz fa des Kreuzecho-Signals durch PRF-Änderung

Durch diese Ausgestaltung ergeben sich folgende Vorteile/Möglichkeiten:

- Leistungsmessung (o.ä., z.B. Amplitude, Quasi-Peak, etc.) des Kreuzecho-Signals liefert kontinuierliches NF-Signal für Kreuzecho-Detektion und -Abstandsmessung

- zur digitalen Weiterverarbeitung kostengünstige Abtastung des NF-Leistungssignals mit kleinen Abtastraten (bestimmt durch Objekt-Sensor-Dynamik und Scangeschwindigkeit) möglich
- Kreuzechos können parallel zu Direktechos ausgewertet werden, da das Kreuzecho-Signal im I, Q-Signal mit der PRF in separatem Frequenz-Bereich platziert wird (Freq-Multiplex-Betrieb)
- Eine aufwendige Phasensynchronisation der Träger ist nicht nötig, aber eine minimale Kurzzeit-Frequenzstabilität (während der Pulsintegrationszeit) der u.U. freilaufenden Oszillatoren wird vorausgesetzt
- Keine hohen Forderungen an Bandbreite von Mischer und NF Verstärkern (oberhalb wählbarer Spiegelfrequenz fa)
- Die Mittenfrequenz des Kreuzecho-Signals kann mit der PRF konstant gehalten werden, z.B. im Falle einer driftenden Trägerfreqeuenzdifferenz (Temperaturgang etc.)
- Aktive Unterdrückung ansonsten sporadisch auftretenden Übersprechens, welches in Sensorarrays bei nicht synchronisiertem Betrieb mit fester PRF auftritt, wenn das Kreuzecho-Signal, z.B. aufgrund von Temperaturdrift der Trägerfrequenzen, zufällig in den Frequenz-Bereich der Direktechos ($0...f_D$) fällt
- Indirekte Überwachung der Trägerfrequenzen als Diagnosefunktion (Build-in-test)
- In Sensorarrays ist eine Kreuzecho-Senderidentifikation durch Schätzung der Trägerfreqeunzdifferenz mittels identifizierter Kreuzecho-Signal-Mittenfrequenz fa, PRF und ganzzahligem Teil n des Quotienten von df und PRF möglich
- Übliche Pulskompressionsverfahren können zusätzlich eingesetzt werden
- Kostengünstige Hardware-Realisierung möglich, z.B. Ausführungsvariante mit niedrigem Aufwand gemäß Figur 6: Steuerbarer PRF-Generator mit PLL/DDS, analoger Bandpaß BP und Leistungsmessung/Einweg-Gleichrichter.

Der Aufwand für die erfindungsgemäße Einrichtung stellt sich folgendermaßen dar:

- Synchrone Pulsansteuerung nötig; (Verbindungsleitung oder durch Rückgewinnung der Sender-PRF aus dem Empfangssignal
  und Kompensation des Phasenversatzes mittels redundanter Messungen)
- Für die fa-Regelung muß die PRF unter Umständen in kleinen Schritten änderbar sein. Die Schritte müssen umso kleiner sein, je größer das Verhältnis df/PRF ist und je kleiner die Bandbreite eines Bandpasses gewählt wird
- In Sensorarrays ist je Nachbarsensor und I(Q) Signal eine Leistungsbestimmung des Kreuzecho-Signals erforderlich.

Nachfolgend werden verschiedene Ausführungsvarianten beschrieben.

Allen Varianten werden gewöhnliche Pulsradarköpfe gemäß Figur 1 unterstellt, das heißt jeder Sender enthält mindestens einen Trägerfrequenz-Oszillator und Modulator (oder schnellen Schalter) zur Pulsmodulation; jeder Empfänger enthält mindestens eine Pulsverzögerungseinheit, einen Trägerfrequenz-Oszillator, einen Modulator (oder schnellen Schalter) zur Pulsmodulation und einen Mischer zur Herabsetzung des Empfangssignals (Figur 1). In einem Sensor-Array kann jeder Sensor aus Sender und Empfänger mit nur einem Trägerfrequenz-Oszillator, der Sender und Empfänger parallel speist, zusammengesetzt sein.

Die vorgeschlagene Einrichtung benötigt also keine Modifikation von üblichen Radarköpfen, wie sie auch zum monostatischen Betrieb benutzt werden. Allen Ausführungsvarianten ist eine pulssynchrone Ansteuerung aller Sensoren, bzw. aller Sender und Empfänger und eine frequenzselektive Auswertung der I- und gegebenenfalls Q-Signale gemein. Unterschiede weisen die Varianten nur in der Signalverarbeitung der I(Q)-Signale auf.

Variante mit niedrigem Aufwand (Figur 6)

I. und gegebenenfalls Q-Signal werden mit analogen Bandpässen 31 mit konstanter Resonanzfrequenz fres gefiltert. Dabei sorgt eine analoge oder digitale Regelung 32 der Mittenfrequenz fa des Kreuzecho-Signals mittels der PRF dafür, dass bei Kreuzecho-Empfang stets maximale Leistung im Durchlassbereich der Bandpässe liegt. Die Leistungsschätzung y des Kreuzecho-Signals erfolgt durch analoge Auswertung des Bandpass-Ausgangssignals, z.B. einfache Gleichrichtung (Einweg-Gleichrichter/Square-Law-Detector) und Glättung. Zur digitalen Weiterverarbeitung (Detektion, Abstandsbestimmung z.B. durch Scanbetrieb, siehe Detektorausgänge $c_I(\tau)$, $c_Q(\tau)$) ist eine Abtastung 33 des Signals (y) mit niedriger Rate möglich.

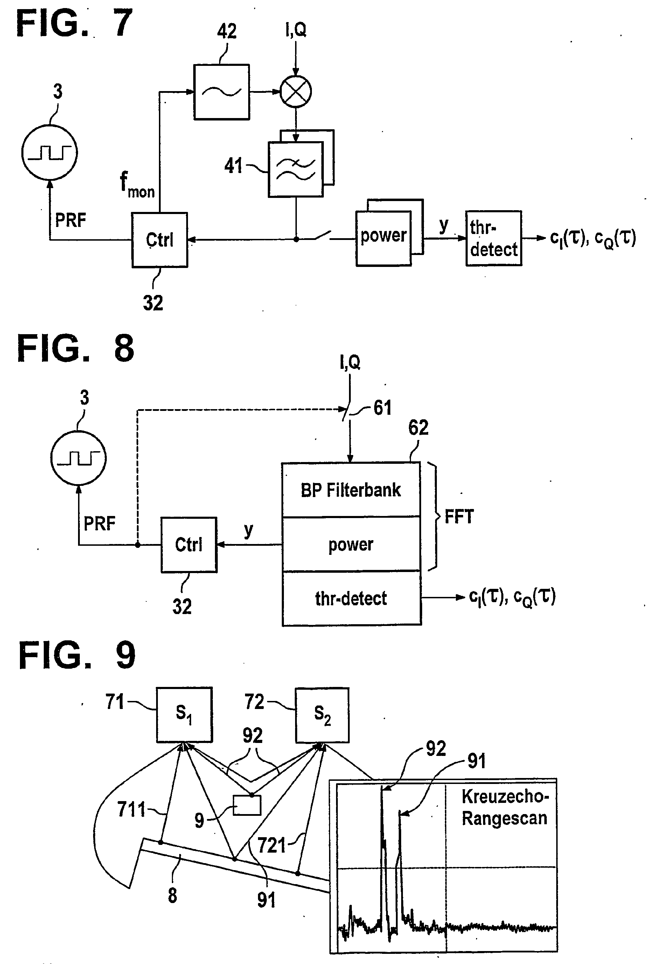

Variante mit mittlerem Aufwand (Figur 7)

Spectrum-Analyzer-Prinzip: I- und gegebenenfalls Q-Signal werden mit sinusförmigen Signalen von auf eine Monitorfrequenz fmon gestimmten Oszillatoren 42, z.B. Direct Digital Synthesizer DDS, gemischt (multipliziert). Falls die Mittenfrequenz fa des Kreuzecho-Signals in der Nähe von fmon liegt, entsteht ein Tiefpaßsignal, dessen Leistung nach Tiefpassfilterung 41 analog oder digital geschätzt und wie bei der Ausfiihrungsvariante mit niedrigem Aufwand ausgewertet werden kann. Der Vorteil dieser Variante ist, dass die Mittenfrequenz fa nicht konstant gehalten werden braucht, sondern fmon fa folgen kann. Zudem kann das gesamte Spektrum von 0... PRF/2 auf externe Störungen überwacht werden. Überdies ist bereits eine Abtastung eines Tiefpaßsignals mit niedriger Rate und somit eine enge digitale Tiefpassfilterung und sehr genaue Leistungsbestimmung möglich.

Variante mit höherem Aufwand (Figur 8)

I- und gegebenenfalls Q-Signal werden pulssynchron das heißt mit Rate gleich momentane PRF, abgetastet 61. Anschließend folgt eine digitale Filterung mit einer Bandpass-Filterbank, vgl. Dopplerfilterbänke bei MTP-Radaren 62, und eine digitale Leistungsschätzung. Dies entspricht einer Schätzung des I-, Q-Leistungsdichte-Spektrums in Teilbereichen oder dem gesamten Spektrum, von 0... PRF/2. Hierzu kann auch eine numerisch effiziente FFT (Fast Fourier Transform) verwendet werden.

Der Vorteil dieser Variante ist, dass Leistung und Mittenfrequenz eines Kreuzecho-Signals aus dem Spektrum sehr robust bestimmt werden können, auch wenn zunächst keine Informationen über die Mittenfrequenz aus der Vergangenheit vorliegen sollten (Fang- oder Scan-Modus). Es besteht maximale Flexibilität bezüglich der (digitalen) fa-Vorgabe/Regelung. Zudem ist eine sichere Detektion von Störsignalen möglich. In Sensor-Arrays können die Kreuzecho-Signale aller Nachbarsensoren gleichzeitig überwacht werden.

Figur 9 zeigt zwei räumlich beabstandete Radarsensoren 71 und 72, die jeweils für Sende- und Empfangsbetrieb ausgerüstet sind. Die Direktechos sind mit 711 und 721 bezeichnet. Sie werden von der Wand 8 reflektiert. Das Objekt 9 im Nahfeld der Radarsensoren kann durch diese Direktechos nicht detektiert werden. Es ist nur über das Kreuzecho 92 zu detektieren. Das Kreuzecho 91 wird von der Wand 8 reflektiert. Im ebenfalls in Figur 9 dargestellten Kreuzecho-Rangescan erscheint das Kreuzecho-Signal 92 bedingt durch die kürzere Laufzeit zuerst. Das Kreuzecho-Signal 91 erscheint mit einer laufzeitbedingten Verzögerung. Die Auswertung der Kreuzecho-Signale führt zu einer Erhöhung der räumlichen Abtastung im Nahbereich (Winkelauflösung), erlaubt die Klassifikation von Objektkonturen und vergrößert die Redundanz insbesondere im Fernbereich, das heißt durch die beiden Messwerte der Direktechos 711 und 721 und des Kreuzechos 91 kann verifiziert werden, dass das Objekt 8 tatsächlich eine zusammenhängende Reflexionsfläche ist. Würden die Direktechos 711 und 721 eintreffen, das Kreuzecho 91 aber nicht, so könnte es sich um zwei verschiedene Objekte im Fernbereich handeln. Zu beachten ist jedoch, dass bei größerem Objekt 9 eine Abschattung des Kreuzechos 91 von der Wand 8 eintreten könnte. Um hier die Redundanz- und die Detektionssicherheit zu erhöhen, ist eine Kreuzecho-Auswertung von mehr als zwei Radarsensoren untereinander vorteilhaft (Sensor-Array).

**Patentansprüche**

1. Radar-Einrichtung für sowohl bistatischen als auch monostatischen Betrieb, bestehend aus mindestens zwei räumlich beabstandeten Radarsensoren (11, 12) für Sende- und/oder Empfangsbetrieb, wobei jeder Radarsensor aus einem Sende- (11) und einem Empfangsmodul (12) besteht und jedem Sende- und jedem Empfangsmodul jeweils ein unabhängiger separater freilaufender Trägerfrequenz-Oszillator (21 bzw. 22) und ein Modulator (51 1 bzw. 52) zum Aufprägen von Pulsen einer Pulssignalquelle (3) auf das vom jeweiligen Trägerfrequenz-Oszillator (21, 22) abgegebene Ausgangssignal zugeordnet ist, wobei eine Zeitsynchronsteuerung der Pulse für mindestens zwei einander zugeordnete Sende- Empfangsmodule (11, 12) vorgesehen ist und wobei eine Auswerteeinrichtung (4) für Kreuzecho-Signale (91, 92) vorgesehen ist, welche einen Mischer (7) enthält, in dem ein im Empfangsmodul (12) aufbereiteter gepulster Träger mit einem Empfangssignal gemischt wird.

2. Einrichtung nach Anspruch 1, **dadurch gekennzeichnet, dass** jedem Radarsensor (11 , 12) eine separate Pulssignalquelle (3) zugeordnet ist und dass eine gemeinsame Pulssignalquelle (3) für einander zugeordnete Radarsensoren (11, 12) für Sende- und Empfangsbetrieb vorgesehen ist.

3. Einrichtung nach Anspruch 1, **dadurch gekennzeichnet, dass** jedem Radarsensor (11, 12) eine separate Pulssignalquelle (3) zugeordnet ist und dass die Zeitsynchronsteuerung der Pulse durch Rückgewinnung der Sender-Pulswiederholrate (PRF) und einer Kompensation des Phasenversatzes auf Basis von redundanten Kreuzecho-Messungen (von 11 bis 12) und eventuell vorhandener Direktecho-Messungen ermittelt wird, wobei die redundanten Kreuzecho-Messungen (von 11 bis 12) aus der Umkehrbarkeit der Signallaufwege zwischen den Radarsensoren resultieren.

4. Einrichtung nach einem der Ansprüche 1 oder 2, **dadurch gekennzeichnet, dass** zur Zeitsynchronsteuerung im Signalpfad des Empfangssensors (12) zwischen der Pulssignalquelle (3) und dem Modulator (52) eine Verzögerungsschaltung (6) vorgesehen ist, die so einstellbar ist, dass eine Signalverzögerung der Pulse der Pulssignalquelle (3) entsprechend der Laufzeit der ausgesendeten Radarpulse bis zum Empfang nach deren Reflexion an mindestens einem Objekt zustande kommt.

5. Einrichtung nach einem der Ansprüche 1 bis 4, **dadurch gekennzeichnet, dass** die Auswerteeinrichtung (4) einen Mischer (7) enthält, dem einerseits der in einem Empfangsmodul (12) aufbereitete gepulste Träger und andererseits ein zugeordnetes Direktecho- (711, 721) und/oder Kreuzecho-Signal (91, 92) zuführbar ist.

6. Einrichtung nach einem der Ansprüche 1 bis 5, **dadurch gekennzeichnet, dass** der Auswerteeinrichtung (4) eine Tiefpassfilterung zugeordnet ist zur Auswertung der Signalanteile des Kreuzecho-Signals (91, 92), die im wesentlichen bei Frequenzen unterhalb der Pulswiederholrate liegen.

7. Einrichtung nach einem der Ansprüche 1 bis 6, **dadurch gekennzeichnet, dass** die Auswerteeinrichtung (4) durch geeignete Mischung und Tiefpassfilterung (41) ausgebildet ist, um eine analoge Leistungsschätzung des Kreuzecho-Signals (91, 92) durchzuführen.

8. Einrichtung nach einem der Ansprüche 1 bis 5, **dadurch gekennzeichnet, dass** der Auswerteeinrichtung (4) zur analogen Leistungsschätzung des Kreuzecho-Signals (91, 92) ein oder mehrere Bandpässe (31) mit nachfolgender analoger Leistungsschätzung des Bandpass-Signals zugeordnet sind.

9. Einrichtung nach Anspruch 7, **dadurch gekennzeichnet, dass** das Mittel zur analogen Leistungsschätzung des Kreuzecho-Signals (91, 92) durch Abmischung mit einem durchstimmbaren Sinussignal und nachfolgender Tiefpassfilterung vorgesehen ist.

10. Einrichtung nach einem der Ansprüche 1 bis 6, **dadurch gekennzeichnet, dass** ein erster Mischer zur Abtastung eines Inphase- und daneben ein weiterer Mischer zur Abtastung eines Quadratur-Empfangsignals mit der Pulswiederholrate vorgesehen ist, wobei der weitere Mischer gegenüber dem ersten Mischer mit 90° phasenversetztem Träger betrieben wird, und dass Mittel zur digitalen Filterung und/oder Frequenzanalyse und/oder Leistungsschätzung des Kreuzecho-Signals (91, 92) vorgesehen sind.

11. Einrichtung nach einem der Ansprüche 1 bis 10, **dadurch gekennzeichnet, dass** Mittel zur kontinuierlichen oder zeitweisen Steuerung oder Regelung Mittenfrequenz eines bzw. des Kreuzecho-Signals (91, 92) insbesondere durch Änderung der Pulswiederholrate vorgesehen sind.

12. Einrichtung nach Anspruch 11, **dadurch gekennzeichnet, dass** eine Regelung der Mittenfrequenz des Kreuzecho-Signals (91, 92) anhand einer Leistungs- und/oder Frequenzschätzung des Kreuzecho-Signals (91, 92) ausführbar ist.

13. Einrichtung nach Anspruch 11 oder 12, **dadurch gekennzeichnet, dass** neben der kontinuierlichen Regelung der Mittenfrequenz des Kreuzecho-Signals (91, 92) die durch die Differenz der Trägerfrequenz-Oszillatoren (21, 22) unterschiedlicher Radarsensoren (11, 12) und die Puls-Wiederholrate der Pulssignalquelle (3) gegeben ist, ein Such- oder Fangmodus zum ersten oder erneuten Auffinden der Mittenfrequenz des Kreuzecho-Signals (91, 92) vorgesehen ist.

14. Einrichtung nach einem der Ansprüche 1 bis 13, **dadurch gekennzeichnet, dass** Mittenfrequenz eines bzw. des Kreuzecho-Signals (91, 92), die durch die Differenz der Trägerfrequenz-Oszillatoren (21, 22) unterschiedlicher Radarsensoren (11, 12) und die Puls-Wiederholrate der Pulssignalquelle (3) gegeben ist, so steuerbar oder regelbar ist, dass eine gleichzeitige Auswertung von Direkt- (711, 721) und Kreuzechos (91, 92) möglich ist.

15. Einrichtung nach einem der Ansprüche 1 bis 14, **dadurch gekennzeichnet, dass** Mittel vorgesehen sind, um Mittenfrequenz eines bzw. des Kreuzecho-Signals (91, 92), die durch die Differenz der Trägerfrequenz-Oszillatoren (21, 22) unterschiedlicher Radarsensoren (11, 12) und die Puls-Wiederholrate der Pulssignalquelle (3) gegeben ist, so zu steuern oder zu regeln, dass ein Übersprechen von Kreuzechos (91, 92) in den Frequenzbereich der Direktechos (711, 821) unterdrückt wird.

16. Einrichtung nach einem der Ansprüche 1 bis 15, **dadurch gekennzeichnet, dass** ein bzw. das Kreuzecho-Signal (91, 92) zur Überwachung der Trägerfrequenzen der Trägerfrequenz-Oszillatoren (21, 22) als Diagnosefunktion vorgesehen ist.

17. Einrichtung nach einem der Ansprüche 1 bis 16, **dadurch gekennzeichnet, dass** eine Kreuzecho-Senderidentifikation anhand geschätzter Trägerfrequenz-Differenzen verschiedener Radarsensoren (11, 12) innerhalb eines Sensorarrays vorgesehen ist, die auf Schätzungen aktuellen Kreuzecho-Signal-Mittenfrequenz, die durch die Differenz der Trägerfrequenz-Oszillatoren (21, 22) unterschiedlicher Radarsensoren (11, 12) und die Puls-Wiederholrate der Pulssignalquelle (3) gegeben ist, Schätzungen ganzzahligen Teils des Quotienten von Trägerfrequenz-Differenz und Pulswiederholrate und Kenntnis der aktuellen Pulswiederholrate beruhen.

18. Einrichtung nach einem der Ansprüche 1 bis 17, **dadurch gekennzeichnet, dass** in den Radarsensoren (11, 12) zusätzlich Pulskompression, z.B. Frequenz-Phasenmodulation, oder Intrapulskodierung, z.B. Pseudo-Noise-Kodierung, zur Erhöhung der Störfestigkeit und/oder Senderidentifikation eingesetzt wird.

19. Einrichtung nach einem der vorhergehenden Ansprüche 1 bis 16, **dadurch gekennzeichnet, dass** zusätzlich ein für beide Radarsensoren (11, 12) synchroner Puls-Jitter eingesetzt wird.

**Claims**

1. Radar device for both bistatic and monostatic operation, comprising at least two spatially separated radar sensors (11, 12) for transmission and/or reception operation, with each radar sensor comprising a transmission module (11) and a reception module (12), and each transmission and reception module in each case having an associated independent, separate, free-running, carrier-frequency oscillator (21 and 22, respectively) and a modulator (51 and 52, respectively) for application of pulses from a pulsed-signal source (3) to the output signal emitted from the respective carrier-frequency oscillator (21, 22), with time synchronization control being provided for the pulses for at least two mutually associated transmission/reception modules (11, 12), and with an evaluation device (4) being provided for cross-echo signals (91, 92), which evaluation device (4) contains a mixer (7) in which a pulsed carrier which has been preprocessed in the reception module (12) is mixed with a received signal.

2. Device according to Claim 1, **characterized in that** each radar sensor (11, 12) has an associated separate pulsed-signal source (3), and **in that** a common pulsed-signal source (3) is provided for mutually associated radar sensors (11, 12) for transmission and reception operation.

3. Device according to Claim 1, **characterized in that** each radar sensor (11, 12) has an associated separate pulsed-signal source (3), and **in that** the time synchronization control for the pulses is determined by recovery of the transmitter pulse repetition frequency (PRF), and compensation for the phase offset is determined on the basis of redundant cross-echo measurements (from 11 to 12) and any available direct-echo measurements, with the redundant cross-echo measurements (from 11 to 12) resulting from the reciprocality of the signal propagation paths between the radar sensors.

4. Device according to one of Claims 1 or 2, **characterized in that** a delay circuit (6) is provided for time synchronization control in the signal path of the reception sensor (12) between the pulsed-signal source (3) and the modulator (52) and can be adjusted so as to reduce a signal delay for the pulses from the pulsed-signal source (3) corresponding to the delay time of the transmitted radar pulses until their reception after their reflection on at least one object.

5. Device according to one of Claims 1 to 4, **characterized in that** the evaluation device (4) contains a mixer (7) for which, on the one hand, the pulse carrier which has been preprocessed in a reception module (12) can be supplied and to which, on the other hand, an associated direct-echo signal (711, 721) and/or cross-echo signal (91, 92) can be supplied.

6. Device according to one of Claims 1 to 5, **characterized in that** the evaluation device (4) has associated low-pass filtering for evaluation of the signal components of the cross-echo signal (91, 92), which are essentially at frequencies below the pulse repetition frequency.

7. Device according to one of Claims 1 to 6, **characterized in that** the evaluation device (4) uses suitable mixing and low-pass filtering (41) to carry out analogue power estimation on the cross-echo signal (91, 92).

8. Device according to one of Claims 1 to 5, **characterized in that** the evaluation device (4) has one or more associated bandpass filters (31), followed by analogue power estimation of the bandpass-filtered signal, for analogue power estimation of the cross-echo signal (91, 92).

9. Device according to Claim 7, **characterized in that** the means for analogue power estimation of the cross-echo signal (91, 92) is provided by down-mixing with a tuneable sinusoidal signal followed by low-pass filtering.

10. Device according to one of Claims 1 to 6, **characterized in that** a first mixer is provided for sampling of an in-phase received signal and, in addition, a further mixer is provided for sampling of a quadrature received signal at the pulse repetition frequency, with the further mixer being operated with a carrier which is phase-shifted through 90° with respect to the first mixer, and **in that** means are provided for digital filtering and/or frequency analysis and/or power estimation of the cross-echo signal (91, 92).

11. Device according to one of Claims 1 to 10, **characterized in that** means are provided for continuous open-loop or closed-loop control, or for open-loop or closed-loop control at times, of the mid-frequency of a or the cross-echo signal (91, 92), in particular by variation of the pulse repetition frequency.

12. Device according to Claim 11, **characterized in that** the mid-frequency of the cross-echo signal (91, 92) can be subjected to closed-loop control on the basis of a power estimate and/or frequency estimate of the cross-echo signal (91, 92).

13. Device according to Claim 11 or 12, **characterized in that**, in addition to the continuous closed-loop control of the mid-frequency of the cross-echo signal (91, 92), which is produced by the difference between the carrier-frequency oscillators (21, 22) in different radar sensors (11, 12) and the pulse repetition frequency of the pulsed-signal source (3), a search or catchment mode is provided for the first or renewed finding of the mid-frequency of the cross-echo signal (91, 92).

14. Device according to one of Claims 1 to 13, **characterized in that** the mid-frequency of a or the cross-echo signal (91, 92), which is obtained by the difference between the carrier-frequency oscillators (21, 22) in different radar sensors (11, 12) and the pulse repetition frequency of the pulsed-signal source (3), can be subjected to open-loop or closed-loop control so as to allow simultaneous evaluation of direct echoes (711, 721) and cross-echoes (91, 92).

15. Device according to one of Claims 1 to 14, **characterized in that** means are provided in order to provide closed-loop or open-loop control for the mid-frequency of a or the cross-echo signal (91, 92), which is provided by the difference between the carrier-frequency oscillators (21, 22) in different radar sensors (11, 12) and the pulse repetition frequency of the pulsed-signal source (3), so as to suppress crosstalk from cross-echoes (91, 92) into the frequency range of the direct echoes (711, 821).

16. Device according to one of Claims 1 to 15, **characterized in that** a or the cross-echo signal (91, 92) is provided as a diagnosis function for monitoring of the carrier frequencies of the carrier-frequency oscillators (21, 22).

17. Device according to one of Claims 1 to 16, **characterized in that** cross-echo transmitter identification is provided on the basis of estimated carrier-frequency differences between different radar sensors (11, 12) within a sensor array, which are based on estimates of the current cross-echo signal mid-frequency, which is produced by the difference between the carrier-frequency oscillators (21, 22) in different radar sensors (11, 12) and the pulse repetition frequency of the pulsed-signal source (3), estimates of the integer part of the quotient of the carrier-frequency difference and pulse repetition frequency, and the knowledge of the actual pulse repetition frequency.

18. Device according to one of Claims 1 to 17, **characterized in that** the radar sensors (11, 12) additionally use pulse compression, for example frequency phase modulation, or intrapulse coding, for example pseudo-noise coding, in order to increase the interference immunity and/or transmitter identification.

19. Device according to one of the preceding Claims 1 to 16, **characterized in that** pulse jitter which is synchronous for the two radar sensors (11, 12) is additionally used.

**Revendications**

1. Dispositif radar pour un fonctionnement à la fois bistatique et monostatique, constitué d'au moins deux détecteurs radar (11, 12) situés à distance l'un de l'autre dans l'espace pour un mode d'émission et/ou de réception, chaque détecteur radar étant constitué d'un module d'émission (11) et d'un module de réception (12), avec chaque fois associés à chaque module d'émission et de réception, un oscillateur à fréquence porteuse (21 ou 22) séparé indépendant ainsi qu'un modulateur (51 ou 52) pour graver des impulsions d'une source de signaux à impulsions (3) sur le signal de sortie émis par l'oscillateur à fréquence porteuse respectif (21, 22), une commande à synchronisation temporelle des impulsions étant prévue pour au moins deux modules d'émission/réception (11, 12) associés l'un à l'autre, et avec un dispositif d'exploitation (4) pour des signaux d'écho croisé (91, 92), contenant un mélangeur (7) dans lequel une onde porteuse émise par impulsions traitée dans le module de réception (12) est mélangée avec un signal de réception.

**2.** Dispositif selon la revendication 1,
**caractérisé en ce qu'**
à chaque détecteur radar (11, 12) est associée une source de signaux à impulsions séparée (3) et
on prévoit une source de signaux à impulsions commune (3) pour des détecteurs radars associés l'un à l'autre (11, 12) pour le mode d'émission et de réception.

**3.** Dispositif selon la revendication 1,
**caractérisé en ce qu'**
à chaque détecteur radar (11, 12) est associée une source de signaux à impulsions séparée (3), et
la commande à synchronisation temporelle des impulsions est déterminée par collecte du taux de répétition des impulsions de l'émetteur (PRF) et d'une compensation du décalage de phase sur la base de mesures d'écho croisé redondantes (de 11 à 12) et de mesures d'écho direct éventuellement présentes, les mesures d'écho croisé redondantes (de 11 à 12) résultant de la réversibilité des trajets de signaux entre les détecteurs radar.

**4.** Dispositif selon l'une des revendications 1 ou 2,
**caractérisé en ce que**
pour la commande à synchronisation temporelle dans le chemin de signaux du détecteur de réception (12) entre la source de signaux à impulsions (3) et le modulateur (52), on prévoit un circuit de retard (6) réglable de telle sorte qu'un retard de signal des impulsions de la source de signaux à impulsions (3) a lieu en fonction de la durée des impulsions radar émises jusqu'à la réception, après leur réflexion au niveau d'au moins un objet.

**5.** Dispositif selon l'une des revendications 1 à 4,
**caractérisé en ce que**
le dispositif d'exploitation (4) contient un mélangeur (7) auquel peut être amené d'une part l'onde porteuse émise par impulsions traitée dans un module de réception (12) et d'autre part un signal d'écho direct (711, 721) et/ou un signal d'écho croisé (91, 92) associé.

**6.** Dispositif selon l'une des revendications 1 à 5,
**caractérisé en ce qu'**
au dispositif d'exploitation (4) est associée une filtration passe-bas pour l'exploitation des parts de signal du signal d'écho croisé (91, 92) qui se trouvent pour l'essentiel à des fréquences inférieures au taux de répétition des impulsions.

**7.** Dispositif selon l'une des revendications 1 à 6,
**caractérisé en ce que**
le dispositif d'exploitation (4), grâce à un mélange et une filtration passe-bas (41) appropriés, est conçu pour réaliser une estimation de puissance analogique du signal d'écho croisé (91, 92).

**8.** Dispositif selon l'une des revendications 1 à 5,
**caractérisé en ce qu'**
au dispositif d'exploitation (4) pour l'estimation de puissance analogique du signal d'écho croisé (91, 92) sont associés un ou plusieurs filtres passe-bande (31) avec une estimation de puissance analogique ultérieure du signal de filtre passe-bande.

**9.** Dispositif selon la revendication 7,
**caractérisé en ce que**
le moyen d'estimation de puissance analogique du signal d'écho croisé (91, 92) est prévu par mélange avec un signal sinusoïdal et une filtration passe-bas ultérieure.

**10.** Dispositif selon l'une des revendications 1 à 6,
**caractérisé par**

un premier mélangeur pour le balayage d'un signal de réception commun et en supplément un autre mélangeur pour le balayage d'un signal de réception à quadrature avec le taux de répétition des impulsions, l'autre mélangeur fonctionnant, par rapport au premier mélangeur, avec une onde porteuse ayant un décalage de phase de 90°, et des moyens pour la filtration numérique et/ou l'analyse de fréquence et/ou l'estimation de puissance du signal d'écho croisé (91, 92).

11. Dispositif selon l'une des revendications 1 à 10,
**caractérisé par**
des moyens pour la commande ou le réglage continu ou périodique de la fréquence centrale d'un ou du signal d'écho croisé (91, 92), en particulier par la modification du taux de répétition des impulsions.

12. Dispositif selon la revendication 11,
**caractérisé en ce qu'**
un réglage de la fréquence centrale du signal d'écho croisé (91, 92) peut être réalisé à l'aide d'une estimation de puissance et/ou de fréquence du signal d'écho croisé (91, 92).

13. Dispositif selon la revendication 11 ou 12,
**caractérisé en ce qu'**
outre le réglage continu de la fréquence centrale du signal d'écho croisé (91, 92), donnée par la différence entre les oscillateurs à fréquence porteuse (21, 22) de différents détecteurs radar (11, 12) et par le taux de répétition des impulsions de la source de signaux à impulsions (3), on prévoit un mode de recherche ou de capture pour une première ou une nouvelle recherche de la fréquence centrale du signal d'écho croisé (91, 92).

14. Dispositif selon l'une des revendications 1 à 13,
**caractérisé en ce que**
la fréquence centrale d'un ou du signal d'écho croisé (91, 92), donnée par la différence entre les oscillateurs à fréquence porteuse (21, 22) de différents détecteurs radar (11, 12) et par le taux de répétition des impulsions de la source de signaux à impulsions (3), peut être commandée ou réglée de manière à permettre une exploitation simultanée d'échos directs (711, 721) ou d'échos croisés (91, 92).

15. Dispositif selon l'une des revendications 1 à 14,
**caractérisé en ce qu'**
on prévoit des moyens pour commander ou régler la fréquence centrale d'un ou du signal d'écho croisé (91, 92), donnée par la différence entre les oscillateurs à fréquence porteuse (21, 22) de différents détecteurs radar (11, 12) et par le taux de répétition des impulsions de la source de signaux à impulsions (3), de manière à empêcher une diaphonie d'échos croisés (91, 92) dans la plage de fréquence des échos directs (711, 821).

16. Dispositif selon l'une des revendications 1 à 15,
**caractérisé en ce qu'**
un ou le signal d'écho croisé (91, 92) est prévu pour la surveillance des fréquences porteuses des oscillateurs à fréquence porteuse (21, 22) en tant que fonction de diagnostic.

17. Dispositif selon l'une des revendications 1 à 16,
**caractérisé en ce qu'**
on prévoit une identification d'émetteur d'échos croisés à l'aide de différences estimées entre les fréquences porteuses de différents détecteurs radar (11, 12) à l'intérieur d'un ensemble de détecteurs, qui repose sur des estimations de la fréquence centrale de signal d'écho croisé actuelle, donnée par la différence entre les oscillateurs à fréquence porteuse (21, 22) de différents détecteurs radar (11, 12) et par le taux de répétition des impulsions de la source de signaux à impulsions (3), sur des estimations de la partie entière du quotient de la différence entre les fréquences porteuses et le taux de répétition des impulsions et sur la connaissance du taux de répétition des impulsions actuel.

18. Dispositif selon l'une des revendications 1 à 17,
**caractérisé en ce qu'**
on utilise en outre dans les détecteurs radar (11, 12) la compression d'impulsions, par exemple la modulation fréquence/phase ou le codage intra-impulsion, par exemple le codage par séquences pseudo-aléatoires, pour accroître l'immunité au bruit et/ou l'identification de l'émetteur.

19. Dispositif selon l'une des revendications précédentes 1 à 16,

**caractérisé en ce qu'**
on utilise en outre un scintillement d'impulsion synchrone pour les deux détecteurs radar (11, 12).

# FIG. 1

# FIG. 2

# FIG. 3

# FIG. 4

# FIG. 5

# FIG. 6

## FIG. 7

## FIG. 8

## FIG. 9

Kreuzecho-Rangescan